# EUROPÄISCHE PATENTANMELDUNG

(11) **EP 0 890 585 A2**
(43) Veröffentlichungstag der Anmeldung: **13.01.1999**
(21) Anmeldenummer: 98112883.8
(22) Anmeldetag: 10.07.1998
(51) Int. Cl.: C08F 32/06, C08F 8/04

(54) **Polymerisation von Cyclopentadien mit Kationischen Palladium-Komplexen**

(30) Priorität: 11.07.1997 DE 19729817
(71) Anmelder: BASF AKTIENGESELLSCHAFT, 67056 Ludwigshafen (DE)
(72) Erfinder: Risse, Wilhelm, Prof. Dr., Dublin 14 (IE); Mehler, Christof, Dr., 67061 Ludwigshafen (DE); Connor, Eric, Dalkey, Co. Dublin (IE)
(74) Vertreter: Kinzebach, Werner, Dr.

(57) **Zusammenfassung**

Die Erfindung betrifft ein Verfahren zur Herstellung von Cyclopentadien-Homopolymerisaten mit einem Molekulargewicht im Bereich von 10000 bis 1000000 und weniger als 35 % 1,2-Verknüpfungen unter Verwendung von Palladiumkatalysatoren der Formel

[Pd(R¹-CN)₄]²⁺(A)₂-,

worin R¹ eine Alkylgruppe und A ein stabiles Anion bedeutet.

## Beschreibung

Die vorliegende Erfindung betrifft ein Verfahren zur Herstellung von Polymerisaten von Cyclopentadien unter Verwendung eines Palladiumkatalysators und Palladium-Komplexe, die als Katalysator geeignet sind, und die Hydrierung der erhaltenen Polymerisate.

Es ist bekannt, dass die kationische Polymerisation von Cyclopentadien unter Erhalt des Fünfrings und einer Doppelbindung des cyclischen Diens verläuft, siehe Encycl. Polym. Sci. Engng., Band 4, S. 538, Wiley Interscience, New York (1985). Die Polymerisation an verschiedenen, die kationische Polymerisation ermöglichenden Katalysatoren führt zu Polycyclopentadien mit folgender Struktur: 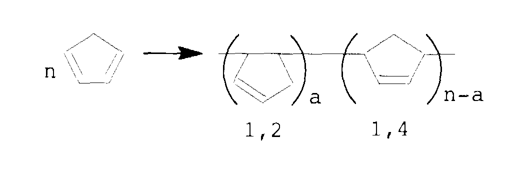 das in vielen Fällen Gelanteile enthält.

Geeignete kationische Katalysatoren, wie Lewissäurehalogenide, Alkyl-Aluminiumhalogenide und Titan-, Wolfram-, Vanadium- und Molybdän-haltige Katalysatoren, sind beispielsweise in der US-A 3,328,372, der DE-A 12 50 128, der US-A 3,387,046, der US-A 3,498,961, der JP 80 104 307 und der JP 72 436 333 offenbart. Der Anteil an 1,2- und 1,4-Verknüpfung der Cyclopentenringe im Polymer hängt von dem bei der Polymerisation des Cyclopentadiens verwendeten Lösungsmittel (J. Polym. Sci. 6, 1175 (1968)) und dem kationischen Katalysator (J. Polym. Sci. 6, 1163 (1968)) ab. Typische Werte liegen zwischen 40 und 50 % 1,2-Verknüpfung. Die Löslichkeit des Polymerisats in Lösungsmitteln, wie Toluol, Cyclohexan, chloroform und Tetrahydrofuran wird durch einen höheren Gehalt an 1,4-Verknüpfung erhöht. Im Allgemeinen ist sie aber aufgrund der Anwesenheit von Gelanteilen im Polymerisat relativ niedrig.

Die Doppelbindung kann leicht funktionalisiert werden, zum Beispiel durch Reaktion mit Butyllithium und Addition chlorierter Derivate oder Hydrierung. Auf diese Weise sind funktionalisierte Polymere oder auch Pfropfcopolymere mit einem Polycyclopentadienrückgrat zugänglich. Polymere des Cyclopentadiens werden zum Beispiel nach Hydrierung als Harze in Klebstoffen eingesetzt. Voraussetzung für diese Funktionalisierung ist jedoch eine ausreichende Löslichkeit des Polycyclopentadiens in Lösungsmitteln, die unter den Bedingungen der Funktionalisierung inert sind. Die Löslichkeit der unter Verwendung bisher bekannter Katalysatoren erhältlichen Polycyclopentadiene ist jedoch nicht befriedigend.

Die Verwendung von Palladium-Komplexen als Katalysatoren für die kationische Copolymerisation von Cyclopentadien mit CO ist aus J. Polym. Sci., 31, 309 (1993) bekannt. Auch für die Copolymerisation von CO mit einer Reihe von olefinen unter milden Bedingungen sind von Sen et al., J. Am. Chem. Soc., 104, 3520 (1982) und Organometallics, 3, 866 (1984), Palladium-Verbindungen verwendet worden. Die Verwendung dieser Pd-Katalysatoren führt jedoch bei der Homopolymerisation von Cyclopentadien auch zu einem partiell vernetzten Produkt und zu einem entsprechend erhöhten Gehalt an 1,2-Verknüpfungen.

In der WO 96/23010 sind Palladium-Komplexe mit zweizähnigen, über N-koordinierenden Liganden zur Polymerisation von Monoolefinen beschrieben. Diese Komplexe eignen sich jedoch nicht zur Polymerisation von konjugierten Dienen, deren Anwesenheit sogar ausdrücklich ausgeschlossen wird.

Der vorliegenden Erfindung liegt die Aufgabe zugrunde, ein Verfahren zur Herstellung von Cyclopentadienpolymerisaten zur Verfügung zu stellen, die einen geringen Anteil an 1,2-Verknüpfungen aufweisen und daher in vielen Lösungsmitteln besser löslich sind.

Überraschenderweise wurde nun gefunden, dass Polymerisate von Cyclopentadien mit einem geringen Anteil an 1,2-Verknüpfungen unter Verwendung bestimmter, kationischer Palladiumkatalysatoren herstellbar sind.

Gegenstand der vorliegenden Erfindung ist daher ein Verfahren zur Herstellung von Cyclopentadien-Homopolymerisaten unter Verwendung eines Palladiumkatalysators, wobei man als Palladiumkatalysator Palladium-Komplexe der Formel

[Pd(R¹-CN)₄]²⁺(A)₂⁻

einsetzt, worin R¹ für eine C₁-C₈-Alkylgruppe und A für ein stabiles Anion steht.

Die erfindungsgemäßen Palladiumkatalysatoren führen zu Polycyclopentadien der oben angegebenen Formel mit einem hohen zahlenmittleren Molekulargewicht von Mn > 10000, insbesondere > 30000 (bestimmt mittels Gelpermeationschromatographie in Chlorbenzol an Polymer Standards Service Columns (10 µm, SDV linear, 60 cm), Detektion: Differentialrefraktometer (Waters R 401), Polystyrolstandards). Die Obergrenze des Molekulargewichts liegt im Allgemeinen bei 1000000 , vorzugsweise bei 300000 . Das Polymerisat weist < 35 %, insbesondere < 30 % und bevorzugt < 25 % 1,2-Verknüpfungen auf und ist in vielen organischen Lösungsmitteln, wie Chloroform, Toluol, Cyclohexan etc., löslich. Dieses kann zum Beispiel vorteilhaft in an sich bekannter Weise mit H₂ oder chemischen H-übertragenden Agenzien hydriert werden. Auch andere Derivatisierungen sind gut möglich, da das erfindungsgemäß erhältliche Polycyclopentadien im Wesentlichen unvernetzt ist und somit noch nahezu alle Doppelbindungen zur Verfügung stehen.

Das Monomer Cyclopentadien wird vorteilhaft direkt vor der Polymerisation in dem erfindungsgemäßen Verfahren durch thermisches Cracken des Dimers bei Temperaturen von etwa 175 °C hergestellt. Vorteilhaft wird das Cracken unter trockenem Stickstoff als Schutzgas durchgeführt. Das Cyclopentadien kann bei -20 °C in trockener Atmosphäre aufbewahrt werden.

Die erfindungsgemäßen Palladiumkatalysatoren [Pd(R¹-CN)₄]²⁺(A)₂⁻können durch dem Fachmann bekannte Verfahren hergestellt werden. Als stabiles Anion A eignen sich erfindungsgemäß solche, die nicht nukleophil sind. Bevorzugt sind BF₄⁻, SbX₆⁻, PX₆⁻, AsX₆⁻, BiX₆⁻, wobei X für Cl oder F steht, und/oder B(Ar)₄⁻, wobei Ar für Phenyl, das 1, 2, 3, 4 oder 5 Substituenten aufweist, die unabhängig voneinander ausgewählt sind unter F, Cl oder CF₃, z. B. C₆F₅ oder 3,5-Di-CF₃-C₆H₃, steht. Als Reste R¹ eignen sich C₁-C₈-Alkylgruppen, bevorzugt C₁-C₄-Alkylgruppen und insbesondere Methyl- oder Ethylgruppen.

Besonders bevorzugt sind Komplexe dieser Katalysatoren mit Palladium-koordinierenden Agenzien, insbesondere Olefinen oder Diolefinen. Geeignete Palladium-komplexierende Agenzien sind zum Beispiel C₁-C₁₂-Olefine, wie Ethylen, Propylen oder 1,2-Buten etc., Cycloolefine, wie Cyclopenten oder Cyclohexen, C₄-C₈-Diolefine, wie Butadien, Isopren, 1,4-Pentadien, 1,5-Hexadien und cyclische Diolefine, wie Norbornadien oder Cyclooctadien. Als Olefin-Ligand geeignet ist auch der Allylrest (π-Allyl). Bevorzugte Olefine oder Diolefine sind ausgewählt unter Dicyclopentadien, Cyclopenten, Norbornadien, π-Allyl, und/oder Cyclooctadien. Geringe Verunreinigungen des Monomers Cyclopentadien mit seinem dimeren Dicyclopentadien stören demnach die Polymerisation nicht, sondern sind erfindungsgemäß sogar von Vorteil. Durch den Zusatz von Pdkomplexierenden Agenzien können die Reaktionszeiten bzw. Reaktionstemperaturen und das Molekulargewicht kontrolliert werden (die Aktivität des Katalysators wird unter den Reaktionsbedingungen verringert). Eine Gelbildung des Polymerisats, d. h. eine Vernetzung, wird verhindert und die Löslichkeit des Katalysators verbessert.

Die Reaktionstemperatur für das erfindungsgemäße Polymerisationsverfahren liegt vorteilhaft im Bereich von etwa -100 bis +100 °C, bevorzugt -80 bis +80 °C und insbesondere von -50 bis +50 °C. Die Reaktionszeiten betragen typischerweise von 2 Minuten bis 168 Stunden, vorzugsweise von 15 Minuten bis 48 Stunden.

Vorteilhafterweise findet die Polymerisation von Cyclopentadien erfindungsgemäß in einem inerten organischen Lösungsmittel statt, in welchem der Palladiumkatalysator löslich ist. Als Lösungsmittel kommen zum Beispiel halogenierte oder nichthalogenierte Alkane, wie Pentan, Hexan, Dichlormethan, Chloroform, Tetrachlorkohlenstoff, Dichlorethan; Cycloalkane, wie Cyclohexan; gegebenenfalls substituierte aromatische Kohlenwasserstoffe, wie Toluol, Benzol, Xylol und Chlorbenzol und/oder Nitroalkane oder Nitroaromaten, wie Nitrobenzol oder Nitromethan, oder Gemische davon, in Betracht. Bevorzugte organische Lösungsmittel sind ausgewählt unter Dichlormethan, Chloroform, Tetrachlorkohlenstoff, Dichlorethan, Cyclohexan, Toluol, Chlorbenzol, Nitrobenzol oder Nitromethan oder einem Gemisch davon. Bei Verwendung von Nitromethan als Lösungsmittel für die Polymerisation tritt eine Fällung des Polymers ein. Alternativ kann das Polymer gegebenenfalls mit Methanol oder anderen stark polaren Lösungsmitteln gefällt werden, um es aus der Reaktionslösung zu isolieren.

Der Katalysator wird im Molverhältnis 1:1000000 bis 1:5, vorzugsweise 1:100000 bis 1:20 und insbesondere 1:100000 bis 1:200, bezogen auf das Monomer Cyclopentadien, eingesetzt. Die Konzentration des Cyclopentadiens in dem Lösungsmittel liegt gegebenenfalls im Bereich von 0,001 bis 12,2 mol/l, bevorzugt im Bereich von 0,1 bis 12,2 mol/l.

Vorzugsweise wird das erfindungsgemäße Polymerisationsverfahren unter Ausschluss von Wasser und Sauerstoff durchgeführt, beispielsweise unter Stickstoff oder Argon als Schutzgas.

Die erfindungsgemäßen Polymerisate können weiterhin, gewünschtenfalls nach vorheriger Isolierung, in an sich bekannter Weise derivatisiert werden. Zum Beispiel kann sich eine Umsetzung mit metallorganischen Verbindungen, wie Butyllithium, eine Addition von Chlorverbindungen oder eine Hydroformylierung anschließen. Besonders bevorzugt ist hierbei die Hydrierung. Diese kann teilweise oder vollständig sowohl mit heterogenen als auch mit homogenen Katalysatoren durchgeführt werden, die in der Technik allgemein zur Hydrierung von Polymeren mit olefinischen Doppelbindungen verwendet werden.

Geeignete heterogene Katalysatoren beschreiben Rachapudy et al., J. Pol. Sci., 17, 1211 (1979), Tanzer et al., Macromolec. 17, 2708 (1984), DE 29 13 992, DE 30 46 008, DE 32 27 650, DE 39 05 432, DE 30 46 251, EP 200 029 und EP 354 413. Für die homogene Katalyse brauchbare Katalysatoren sind beispielsweise in Storey et al., Macromolec.,24 2920 (1991), Mohammadi et al., Macromolec., 20, 2362 (1987), US 3,700,637, DE 25 39 132, EP 134 023, US 4,464,515, US 4,503,196, EP 224 139 und EP 455 154 offenbart.

Bevorzugt verwendet man den aus der Polymerisation in der Lösung enthaltenen Pd-Katalysator zur Hydrierung. Man kann dabei gegebenenfalls auf eine Isolierung des Polycyclopentadiens aus der Reaktionslösung verzichten. In der Regel erfolgt die Hydrierung in einem Autoklaven unter erhöhtem H₂-Druck und in einem inerten Lösungsmittel. Der H₂-Druck liegt üblicherweise im Bereich von 2 bar bis 200 bar, vorzugsweise von 5 bar bis 50 bar und insbesondere von 10 bis 20 bar. Als Lösungsmittel kommen prinzipiell alle unter den Bedingungen der Hydrierung inerten Lösungsmittel in Betracht, wie beispielsweise auch die oben als Lösungsmittel für die Polymerisation genannten. Vorzugsweise wird bei erhöhter Temperatur hydriert, beispielsweise bei Temperaturen im Bereich von 50 bis 150 °C. Die Reaktionszeiten richten sich nach dem gewünschten Hydrierungsgrad und liegen typischerweise im Bereich von 1 h bis 50 h, vorzugsweise von 5 h bis 20 h.

Als Katalysator eignet sich in besonderer Weise Tris-(triphenylphosphin)-rhodium(I)-chlorid, auch als Wilkinsons Katalysator bezeichnet. Bei Verwendung von 0,01 bis 1 mol%, bevorzugt 0,1 bis 0,5 mol% Tris-(triphenylphosphin)-rhodium(I)-chlorid bezogen auf die zu hydrierenden Doppelbindungen kann die Hydrierung schon bei mäßig hohen Temperaturen von 20 bis 120 °C vollständig erfolgen. Die Reaktion wird in der Regel in inerten Lösungsmitteln im Autoklaven durchgeführt. Die Reaktionszeiten liegen typischerweise im Bereich von 1 h bis 50 h, bevorzugt von 10 h bis 20 h.

Das durch die Hydrierung erhaltene Polymer zeigt eine hohe thermische Stabilität. Bei teilweiser Hydrierung kann es an den verbliebenen Doppelbindungen noch weiter funktionalisiert werden.

Die folgenden Beispiele veranschaulichen das erfindungsgemäße Verfahren.

### Beispiele

### Beispiel 1

In einen 1 l-Schlenkkolben wurden unter trockenem Stickstoff als Schutzgas 255 ml trockenes Dichlormethan gefüllt und auf 0 °C abgekühlt. 75 g frisch hergestelltes Cyclopentadien wurden zugegeben. In einen anderen Schlenkkolben wurden 0,27 g [Pd(CH₃CH₂CN)₄] (BF₄)₂, 0,35 g Dicyclopentadien und 25 ml trockenes Dichlormethan gegeben. Die Katalysatorlösung wurde 5 Minuten gerührt, wobei die Farbe von gelb zu braun wechselte. Die Lösung wurde auf 0 °C gekühlt und unter Verwendung einer Kanüle unter Stickstoff als Schutzgas innerhalb 40 Minuten zu der Monomerlösung gegeben. Die Temperatur in der Lösung wurde mit einem Thermometer gemessen. Nach zwei Stunden wurde die Lösung viskos und hatte eine klare, goldene Farbe. 3 Stunden danach wurde die Mischung unter Zusatz von 5 ml konzentrierter Salzsäure in 1 l Methanol ausgefällt. Es wurde ein weißes Polymer erhalten, das 6 Stunden im Vakuum (50 °C, 0,01 Torr) getrocknet wurde. Es wurden 48 g (64 %) Polymerisat mit einem mittels Gelpermeations-Chromatographie (siehe oben) bestimmten, zahlenmittleren Molekulargewicht von 90000 erhalten. Das Polymerisat wurde unter Stickstoff im Kühlschrank aufbewahrt und blieb löslich.

### Beispiel 2

In einem Schlenkkolben wurden 1,8 g frisch hergestelltes Cyclopentadien in 8 ml Dichlormethan unter trockenem Stickstoff als Schutzgas gelöst und auf 0 °C abgekühlt. In einem weiteren Schlenkkolben wurde in Dichlormethan gelöstes [Pd(CH₃CH₂CN)₄](BF₄)₂ mit 0,05 g Cyclopenten versetzt. Die Lösung wurde dabei gelb. Nach 5 minütigem Rühren wurde die Lösung zu der Monomerlösung gegeben und 24 Stunden gerührt. Dann wurde das Polymerisat in Methanol gefällt und 6 Stunden im Vakuum (50 °C, 0,01 Torr) getrocknet. Es wurden 1,4 g (70 % ) Polymerisat mit einem zahlenmittleren Molekulargewicht von 33000 erhalten. Das Polymer wurde unter Stickstoff im Kühlschrank aufbewahrt und blieb löslich.

### Beispiel 3

In einem Schlenkkolben wurden 5,2 g frisch hergestelltes Cyclopentadien in 8 ml Dichlormethan unter trockenem Stickstoff als Schutzgas gelöst und auf 0 °C abgekühlt. In einem weiteren Schlenkkolben wurden 0,004 g [Pd(CH₃CH₂CN)₄](BF₄)₂ in 5 ml Dichlormethan gelöst und auf 0 °C abgekühlt. Dann wurde die Lösung durch eine Kanüle zu der Monomerlösung gegeben. Die Lösung wurde grün, wobei der Katalysator teilweise ausfiel. Die Lösung wurde 24 Stunden gerührt. Es wurde eine viskose Lösung erhalten und das Polymerisat in Methanol gefällt. Das Polymerisat wurde 6 Stunden im Vakuum (50 °C, 0,01 Torr) getrocknet. Es wurden 1,79 g (40 %) Polymerisat mit einem zahlenmittleren Molekulargewicht von 89000 erhalten. Das Polymerisat wurde unter Stickstoff im Kühlschrank aufbewahrt und blieb löslich.

### Beispiel 4

Unter Inertgasatmosphäre wurde bei -10 °C zu einer Lösung von 2,64 g Cyclopentadien in 6 ml Dichlormethan eine Lösung von 24,4 mg [Pd(CH₃CH₂CN)₄][BF₄]₂ in 4 ml unter Rühren langsam zugegeben. Danach ließ man die Temperatur langsam auf 20 °C ansteigen und es wurde noch 24 Stunden nachgerührt. Das Polymer wurde anschließend in Methanol ausgefällt und im Vakuum getrocknet. Es wurden 2,24 g (85 %) Polymerisat mit einem zahlenmittleren Molekulargewicht von 35000 erhalten.

### Beispiel 5

In einem 1,2 l Autoklaven wurden 15 g Polycyclopentadien mit 1 l Toluol bei 120 °C und 15 bar Wasserstoffdruck 8 (Probe A) bzw. 16 (Probe B) Stunden hydriert. Das Polymer war nach der Reaktion bis auf wenige Gelpartikel vollständig gelöst. Die Bestimmung des Doppelbindungsgehaltes des Polymers durch iodometrische Titration in Anlehnung an die Methode von Wijs (Ind. Engng. Chem. 15, 4531 (1943)) ergab einen Hydrierungsgrad von 30 % für Probe A und 74 % für Probe B.

### Beispiel 6

In einem 1,2 l Autoklaven wurden 7 g Polycyclopentadien in 350 ml Toluol gelöst und 0,2 g (0,2 mol% bezogen auf die zu hydrierenden Doppelbindungen) Tris-(triphenylphosphin)-rhodium(I)-chlorid zugesetzt. Nach dem Schließen des Autoklaven wurde die Lösung zur Verdrängung des restlichen Sauerstoffs dreimal mit Stickstoff belüftet. Die Hydrierung erfolgte unter Rühren bei 70 °C und einem Wasserstoffdruck von 100 bar in 12 Stunden. Dann wurde der Überdruck langsam abgelassen und das Polymer in Methanol ausgefällt. Die ¹H-NMR-Analyse zeigte einen Hydrierungsgrad von 99,3 %.

## Patentansprüche

1. Verfahren zur Herstellung von Cyclopentadien-Homopolymerisaten unter Verwendung eines Palladium-Katalysators, dadurch gekennzeichnet, dass man als Palladium-Katalysator Komplexe der Formel
[Pd(R¹-CN)₄]²⁺(A)₂⁻
verwendet, worin
R¹ für eine C₁-C₈-Alkylgruppe und
A für ein stabiles Anion steht.

2. Verfahren nach Anspruch 1, dadurch gekennzeichnet, dass A für BF₄⁻, SbX₆⁻, PX₆⁻, wobei X für Cl oder F steht, und/oder B(Ar)₄⁻ steht, wobei Ar für C₆F₅ oder 3,5-Bis(CF₃)-C₆H₃ steht.

3. Verfahren nach einem der vorhergehenden Ansprüche, dadurch gekennzeichnet, dass man einen Katalysator verwendet, der zusätzlich ein Palladium-koordinierendes Olefin oder Diolefin umfasst.

4. Verfahren nach einem der vorhergehenden Ansprüche, dadurch gekennzeichnet, dass die Reaktionstemperatur etwa -100 bis +100 °C beträgt.

5. Verfahren nach einem der vorhergehenden Ansprüche, dadurch gekennzeichnet, dass man ein inertes organisches Lösungsmittel, in welchem der Katalysator löslich ist, als Reaktionsmedium verwendet.

6. Verfahren nach einem der Ansprüche 1 bis 5, dadurch gekennzeichnet, dass man das erhaltene Polymer anschließend hydriert.

7. Verfahren nach Anspruch 6, dadurch gekennzeichnet, dass man als Katalysator für die Hydrierung Tris-(triphenylphosphin)-rhodium(I)-chlorid verwendet.

8. Cyclopentadien-Homopolymerisat mit einem Molekulargewicht im Bereich von 10000 bis 1000000 und < 35 % 1,2-Verknüpfungen.

9. Cyclopentadien-Homopolymerisat nach Anspruch 14, erhältlich nach einem Verfahren gemäß einem der Ansprüche 1 bis 7.

10. Palladium-Katalysator der Formel
[Pd(R¹-CN)₄]²⁺(A)₂⁻
worin R¹ für C₂-C₈-Alkyl und A für ein stabiles Anion stehen, der gegebenenfalls zusätzlich ein Palladium-koordinierendes Olefin oder Diolefin umfasst.

11. Palladium-Katalysator nach Anspruch 10, wobei das Palladiumkoordinierende Olefin oder Diolefin Dicyclopentadien, Cyclopenten, Norbornadien, Allyl und/oder Cyclooctadien ist.

12. Verwendung eines Katalysators, wie in einem der Ansprüche 1 oder 2 definiert, zur Homopolymerisation von Cyclopentadien.
